# EUROPEAN PATENT APPLICATION

(11) **EP 0 736 589 A1**
(43) Date of publication of application: **09.10.1996**
(21) Application number: 96105350.1
(22) Date of filing: 03.04.1996
(51) Int. Cl.: C10G 45/08, B01J 23/78

(54) **Process for desulfurizing a catalytically cracked gasoline**

(30) Priority: 05.04.1995 JP 103246/95
(71) Applicant: MITSUBISHI OIL CO., LTD., Minato-ku Tokyo (JP)
(72) Inventor: Hatanaka, Shigeto, Asahi-ku, Yokohama-shi, Kanagawa (JP); Miyama, Tadao, Miura-shi, Kanagawa (JP); Seki, Hiroyuki, Yokohama-shi, Kanagawa (JP); Hikita, Satoru, Tokyo (JP)
(74) Representative: Hansen, Bernd, Dr. Dipl.-Chem.

(57) **Abstract**

A process for desulfurizing a catalytically cracked gasoline containing sulfur compounds and olefin components which comprises hydrodesulfurizing the gasoline with a catalyst. The catalyst comprises a support containing (i) alumina as a main component and (ii) an alkali metal in an amount of 0.2 to 3.0% by weight of the support. At least one active metal selected from the group consisting of chromium, cobalt, nickel, molybdenum and tungsten is provided on the support.

## Description

### BACKGROUND OF THE INVENTION

### Field of the Invention

The present invention relates to a process for desulfurizing a catalytically cracked gasoline. More particularly, this invention relates to a process for desulfurizing a catalytically cracked gasoline containing sulfur compounds and olefin components. The gasoline is hydrodesulfurized using a specific catalyst containing an alkali metal, to thereby inhibit coke precipitation due to olefin polymerization and to maintain stable desulfurization performance over a long period of time.

### Description of the Related Art

Among the products produced in the field of petroleum refining is a catalytically cracked gasoline which is an ingredient of high-octane gasoline containing a large amount of olefin components. The catalytically cracked gasoline is a gasoline fraction obtained by catalytically cracking a heavy petroleum fraction feedstock, e.g., vacuum gas oil or atmospheric residual oil, and recovering and distilling the catalytically cracked product. Catalytically cracked gasoline is used as a major blending ingredient for automotive gasolines.

However, the feedstock to be catalytically cracked originally contains sulfur compounds in a relatively large amount. If this feedstock is catalytically cracked without further treatment, the resulting catalytically cracked product necessarily has a high sulfur compound content. Use of this catalytically cracked product as a blending ingredient for automotive gasolines may adversely affect the environment. To avoid this problem, the feedstock is usually desulfurized prior to catalytic cracking.

Desulfurization is generally carried out by a hydrodesulfurization process which has conventionally been employed in the field of petroleum refining. In this process, the feedstock to be desulfurized is contacted with an appropriate hydrodesulfurization catalyst in a high-temperature hydrogen atmosphere under pressure.

A hydrodesulfurization catalyst is used for the hydrodesulfurization of feedstocks that are to be catalytically cracked, such as, e.g., vacuum gas oil and atmospheric residual oil. The catalyst is prepared by fixing a Group VI element, e.g., chromium, molybdenum, or tungsten, and a Group VIII element, e.g., cobalt or nickel, to an appropriate support, e.g., alumina. The hydrodesulfurization conditions generally include a temperature of about from 300 to 400°C, a partial hydrogen pressure of about from 30 to 200 kg/cm², and a liquid hourly space velocity (LHSV) of about from 0.1 to 10 1/hr.

However, because the hydrodesulfurization of heavy petroleum fractions, e.g., vacuum gas oil and atmospheric residual oil, which are feedstocks to be catalytically cracked, is performed under the high-temperature high-pressure conditions described above, the equipment must be designed so as to withstand such severe conditions. Furthermore, any additional equipment needed to increase production capacity is expensive.

### Problems Solved by this Invention

When the above described catalyst is used to hydrodesulfurize a catalytically cracked gasoline containing olefin components, the initial catalytic activity in desulfurization is satisfactory. However, over the course of time in feedstock desulfurization, a coke precipitate resulting from olefin polymerization accumulates on the catalyst surface to deactivate the catalyst. This deactivation problem is thought to be caused by the presence of Lewis acid sites on the alumina support, which serve as active sites where olefin polymerization proceeds.

### SUMMARY OF THE INVENTION

An object of the present invention is to provide a desulfurizing process in which the decrease in catalytic activity due to coke precipitation is reduced. A second object of the present invention is to provide stable catalytic activity in the catalyzed hydrodesulfurization of a catalytically cracked gasoline containing sulfur compounds and olefin components.

The present inventors have conducted extensive studies in order to overcome the above described problems. As a result, the present inventors have discovered an exceedingly useful process for desulfurizing a catalytically cracked gasoline containing sulfur compounds and olefin components in which the decrease in catalytic activity due to coke precipitation is reduced so as to obtain stable catalytic activity in desulfurization.

The above objects have been achieved by providing a process for desulfurizing a catalytically cracked gasoline containing sulfur compounds and olefin components which comprises hydrodesulfurizing the gasoline with a catalyst, wherein the catalyst comprises a support containing (i) alumina as a main component and (ii) an alkali metal in an amount of 0.2 to 3.0% by weight of the support, and at least one active metal selected from the group consisting of chromium, cobalt, nickel, molybdenum and tungsten is provided on the support.

### DETAILED DESCRIPTION OF THE INVENTION

Although the mechanism for inhibiting olefin polymerization and preventing coke precipitation by an alkali metal has not been elucidated, the alkali metal is thought to reduce the activity of Lewis acid sites on alumina. Useful alkali metals include lithium, sodium and potassium. Potassium is the most effective in inhibiting olefin polymerization.

A catalyst containing an alkali metal may be obtained by fixing the alkali metal to a common desulfurization catalyst that is prepared in advance. However, it is preferable to use a method in which a calcined support, e.g., an alumina support, in the preparation stage is impregnated with an alkali metal salt, calcined again, subsequently impregnated with a salt of an active metal, and then calcined to obtain the desired catalyst. Another preferred method for obtaining the desired catalyst comprises adding an alkali metal salt to an alumina sol or an alumina gel, calcining the mixture to prepare an alumina support, and then impregnating the support with a salt of an active metal, followed by calcining. The catalysts obtained by these methods are effective in inhibiting olefin polymerization and preventing coke precipitation, which effects are characteristic of the present invention. Furthermore, a catalyst obtained by adding a potassium salt to a solution of a salt of an active metal, infiltrating the mixture into a calcined alumina support to simultaneously impregnate the support with the active-metal salt and the potassium salt, and then calcining the impregnated support to fix the active metal to the support is also effective in preventing coke precipitation.

Examples of useful alkali metal sources include carbonic salts, nitric salts and hydroxides. Organic metal salts may also be used. After impregnation with an alkali metal salt, calcination should be conducted in air at a temperature not lower than the decomposition temperature of the metal salt.

Porous inorganic oxide supports ordinarily used in the field of petroleum refining can be employed as the catalyst support for use in the present invention. Examples of the porous inorganic oxide support include alumina, silica, titania and magnesia. These may be used alone or as a mixture thereof. The most desirable of these supports is alumina with respect to heat resistance, ease of molding, surface area, etc.

The support for use in the present invention preferably contains alumina in an amount of 80 wt% or more, more preferably 90 wt% or more. The support for use in the present invention may generally contain a small amount of other component(s) such as silica, phosphorous and boron.

The support is used after molding into a shape suitable for the type of reactor that is being used. For use in a fixed-bed reactor, the support is generally molded by extrusion.

Examples of the active metal for desulfurization include chromium, molybdenum, tungsten, cobalt and nickel. Although these active metals may be used alone or as a mixture thereof, a preferred choice is a combination of cobalt and molybdenum or a combination of nickel, cobalt and molybdenum. On a support, each of these metals can be present in the form of the elemental metal, an oxide, a sulfide, or a mixture thereof. For fixing the active metal to a support, known methods can be used such as, e.g., the impregnation method and the coprecipitation method described above. The active metal is fixed in the form of a metal salt, and thereafter converted to an oxide by calcining in air at a temperature of about 500°C.

After packing into a reactor, the catalyst is activated by presulfurization. For presulfurization, the same method that is used for naphtha desulfurization catalysts can be used herein. That is, presulfurization is generally accomplished by mixing naphtha with a sulfur compound, e.g., dimethyl disulfide, heating this mixture to a temperature of 150 to 350°C together with hydrogen, and then passing the heated mixture through a reactor packed with the catalyst. The sulfur compound, e.g., dimethyl disulfide, reacts with hydrogen on the surface of the active metal of the catalyst to change the same into hydrogen sulfide, which in turn reacts with the active metal to provide a metal sulfide that is active in desulfurization reactions.

Although the type of reaction tower used for the hydrogenation may be any of a fixed-bed, fluidized-bed and boiling-bed type reaction tower, the fixed-bed type is especially preferred. For contacting a catalytically cracked gasoline fraction with hydrogen and the catalyst, any of a co-current ascending flow method, a co-current descending flow method, and a counter-current flow method may be employed. The unit operations for these methods are known in the field of petroleum refining, and suitable unit operations are readily selected by those of ordinary skill in the art.

Reaction conditions for hydrodesulfurization of the catalytically cracked gasoline can be selected in a range such that the temperature is about from 200 to 350°C, the partial hydrogen pressure is about from 5 to 50 kg/cm², and the liquid hourly space velocity (LHSV) is about from 1 to 10 1/hr.

### EXAMPLES

The present invention will be described in greater detail by reference to the following Examples. However, the present invention should not be construed as being limited thereto.

### Example 1

To 200 g of a commercial alumina sol (solid content, 10% by weight) was added 0.29 g of potassium hydroxide. After the mixture was sufficiently stirred, water was evaporated therefrom. The residue was extrusion-molded into granules each having a 1/32-inch columnar form. These granules were dried at 100°C and then calcined at 500°C for 2 hours to prepare an alumina support containing 1 wt% potassium. A 7.85 g portion of this support was impregnated in an ordinary manner with an aqueous solution containing 1.75 g of cobalt nitrate hexahydrate and 2.09 g of ammonium molybdate tetrahydrate. The impregnated support was dried at 100°C and then calcined at 500°C for 4 hours to obtain a catalyst comprising cobalt/molybdenum provided on a potassium-containing alumina support. It was determined that the composition of this catalyst was: MoO₃, 17.0 wt%; CoO, 4.5 wt%; Al₂O₃, 77.5 wt%; K₂O, 1.0 wt%, and that the catalyst had a specific surface area of 258 m²/g and a pore volume of 0.45 ml/g.

### Example 2

A 200 g portion was taken from a commercial alumina sol (solid content, 10% by weight), and water was evaporated therefrom. The residue was extrusion-molded into granules each having a 1/32-inch columnar form. These granules were dried at 100°C and then calcined at 500°C for 2 hours to prepare an alumina support. An aqueous solution containing 0.14 g of potassium hydroxide was infiltrated into 10 g of the alumina support. The impregnated support was dried at 100°C and then calcined at 500°C for 1 hour to prepare a potassium-containing alumina support. A 7.85 g portion of this potassium-containing alumina support was impregnated in an ordinary manner with an aqueous solution containing 1.75 g of cobalt nitrate hexahydrate and 2.09 g of ammonium molybdate tetrahydrate. The impregnated support was dried at 100°C and then calcined at 500°C for 4 hours to obtain a catalyst comprising cobalt/molybdenum provided on a potassium-containing alumina support. It was determined that the composition of this catalyst was: MoO₃, 16.9 wt%; CoO, 4.6 wt%; Al₂O₃, 77.4 wt%; K₂O, 1.1 wt%, and that the catalyst had a specific surface area of 265 m²/g and a pore volume of 0.43 ml/g.

### Example 3

A 7.78 g portion of an alumina support prepared in the same manner as in Example 2 was impregnated in an ordinary manner with an aqueous solution containing 0.11 g of potassium hydroxide, 1.75 g of cobalt nitrate hexahydrate, and 2.09 g of ammonium molybdate tetrahydrate. The impregnated support was dried at 100°C and then calcined at 500°C for 4 hours to obtain a catalyst comprising cobalt/molybdenum provided on a potassium-containing alumina support. It was determined that the composition of this catalyst was: MoO₃, 17.0 wt%; CoO, 4.4 wt%; Al₂O₃, 77.4 wt%; K₂O, 1.0 wt%, and that the catalyst had a specific surface area of 279 m²/g and a pore volume of 0.44 ml/g.

### Comparative Example 1

A 200 g portion was taken from a commercial alumina sol (solid content, 10% by weight), and water was evaporated therefrom. The residue was extrusion-molded into granules each having a 1/32-inch columnar form. These granules were dried at 100°C and then calcined at 500°C for 2 hours to prepare an alumina support. A 7.85 g portion of this alumina support was impregnated in an ordinary manner with an aqueous solution containing 1.75 g of cobalt nitrate hexahydrate and an aqueous solution containing 2.09 g of ammonium molybdate tetrahydrate. The impregnated support was dried at 100°C and then calcined at 500°C for 4 hours to obtain a catalyst comprising cobalt/molybdenum provided on an alumina support. It was determined that the composition of this catalyst was: MoO₃, 17.0 wt%; CoO, 4.5 wt%; Al₂O₃, 78.5 wt%, and that the catalyst had a specific surface area of 270 m²/g and a pore volume of 0.42 ml/g.

A 3.8 g portion (4.0 ml) of each of the catalysts obtained in Examples 1 to 3 and Comparative Example 1 was packed into a small fixed-bed co-current descending flow type reactor.

Using JIS No. 1 industrial gasoline to which 5 wt% dimethyl disulfide had been added, presulfurization was conducted for 5 hours under conditions of a temperature of 300°C, a pressure of 15 kg/cm², and an LHSV of 2 1/hr. After completing the sulfurization, the temperature was lowered to 270°C. A catalytically cracked gasoline (density at 15°C, 0.776 g/cm³; sulfur content, 192 ppm; olefin content, 33 vol%; research octane number, 87.5) which was an 80-210°C fraction obtained by catalytically cracking a feedstock containing a topping residue was subjected to a desulfurization reaction test. The reaction was conducted under conditions of a partial hydrogen pressure of 15 kg/cm², an LHSV of 14 1/hr, and a hydrogen/oil ratio of 2,000 scf/bbl to accelerate catalyst deactivation.

Table 1 shows the properties of the reaction product determined 1 day and 30 days after initiating the reaction, and the amount of coke precipitated on each catalyst determined 30 days after initiating the reaction.

**Table 1**

| Results of Desulfurization of Catalytically Cracked Gasoline | | | |
|---|---|---|---|
| | Degree of desulfurization (%) | Octane number (RON) | Amount of coke precipitate (wt%) |
| | | | |

| Example 1 | | | |
|---|---|---|---|
| After 1 day | 77.1 | 86.5 | - |
| After 30 days | 69.4 | 86.9 | 6.5 |

| Example 2 | | | |
|---|---|---|---|
| After 1 day | 77.5 | 86.6 | - |
| After 30 days | 69.8 | 87.1 | 6.3 |

| Example 3 | | | |
|---|---|---|---|
| After 1 day | 77.0 | 86.3 | - |
| After 30 days | 69.5 | 87.0 | 6.5 |

| Comparative Example 1 | | | |
|---|---|---|---|
| After 1 day | 77.1 | 86.2 | - |
| After 30 days | 64.8 | 87.0 | 7.8 |

By using a specific catalyst containing an alkali metal of the present invention in the catalyzed hydrodesulfurization of a catalytically cracked gasoline containing sulfur compounds and olefin components, coke precipitation due to olefin polymerization is inhibited and stable desulfurization performance is maintained over a long period of time.

While the invention has been described in detail and with reference to specific embodiments thereof, it will be apparent to one skilled in the art that various changes and modifications can be made therein without departing from the spirit and scope thereof.

## Claims

1. A process for desulfurizing a catalytically cracked gasoline containing sulfur compounds and olefin components which comprises hydrodesulfurizing the gasoline with a catalyst, wherein the catalyst comprises a support containing (i) alumina as a main component and (ii) an alkali metal in an amount of 0.2 to 3.0% by weight of the support, and at least one active metal selected from the group consisting of chromium, cobalt, nickel, molybdenum and tungsten is provided on the support.

2. The process for desulfurizing a catalytically cracked gasoline as claimed in claim 1, wherein the active metal comprises a combination of cobalt and molybdenum or a combination of nickel, cobalt and molybdenum.

3. The process for desulfurizing a catalytically cracked gasoline as claimed in claim 1 or 2, wherein the alkali metal is potassium.

4. The process for desulfurizing a catalytically cracked gasoline as claimed in claim 3, wherein the hydrodesulfurization is conducted using a catalyst produced by:
impregnating a calcined alumina support with a potassium salt to prepare an impregnated alumina support;
calcining the impregnated support to prepare a potassium-containing alumina support;
impregnating the potassium-containing support with a salt of the active metal to prepare an impregnated potassium-containing support; and
calcining the impregnated potassium-containing support.

5. The process for desulfurizing a catalytically cracked gasoline as claimed in claim 3, wherein the hydrodesulfurization is conducted using a catalyst produced by:
compounding a potassium salt in an alumina sol or an alumina gel to prepare a mixture;
calcining the mixture to prepare an alumina support;
impregnating the alumina support with a salt of the active metal to prepare an impregnated alumina support; and
calcining the impregnated alumina support.

6. The process for desulfurizing a catalytically cracked gasoline as claimed in claim 3, wherein the hydrodesulfurization is conducted using a catalyst produced by:
adding a potassium salt to a solution of a salt of the active metal to prepare a potassium-containing solution;
impregnating a calcined alumina support with the potassium-containing solution to prepare an impregnated alumina support, to thereby simultaneously impregnate the support with the salt of the active metal and the potassium salt; and
calcining the impregnated alumina support.

7. A process for desulfurizing a catalytically cracked gasoline which comprises contacting the gasoline with a hydrodesulfurization catalyst at a temperature of about from 200 to 350°C, a partial hydrogen pressure of about from 5 to 50 kg/cm² and a liquid hourly space velocity of about from 1 to 10 1/hr, wherein the catalyst comprises a support containing (i) alumina as a main component and (ii) an alkali metal in an amount of 0.2 to 3.0% by weight of the support, and at least one active metal selected from the group consisting of chromium, cobalt, nickel, molybdenum and tungsten is provided on the support.

8. The process of claim 7, wherein the gasoline contains sulfur compounds and olefin components.

9. A catalyst for desulfurizing a catalytically cracked gasoline containing sulfur compounds and olefin components, comprising a support containing (i) alumina as a main component and (ii) an alkali metal in an amount of 0.2 to 3.0 % by weight of the support, and at least one active metal selected from the group consisting of chromium, cobalt, nickel, molybdenum and tungsten is provided on the support.
